# EUROPEAN PATENT APPLICATION

(11) **EP 4 717 452 A1**
(43) Date of publication of application: **01.04.2026**
(21) Application number: 24170949.2
(22) Date of filing: 18.04.2024
(51) Int. Cl.: B32B 5/02, B32B 5/18, B32B 15/14, B32B 15/20, B32B 21/08, B32B 27/08, B32B 27/12, B32B 27/28, B32B 27/38, B32B 27/42

(54) **MULTI-LAYER ASSEMBLY AND ITS USE AS BATTERY ENCLOSURE**

(71) Applicant: Lilium GmbH, 82131 Gauting (DE)
(72) Inventor: PALMIERI, Frank, 82131 Gauting (DE); HIRSCH, Christian, 82131 Gauting (DE); ROBERTS, Alistair, 82131 Gauting (DE); FELSL, Dominik, 82131 Gauting (DE); SUMAN, Taylan, 82131 Gauting (DE); DÍAZ CASTRO, Noelia, 82131 Gauting (DE)
(74) Representative: Ter Meer Steinmeister & Partner

(57) **Abstract**

The present invention relates to a multi-layer assembly, comprising at least one erosion barrier layer, at least one thermal insulation, at least one composite structure layer, and at least one gas barrier layer.

## Description

The present invention relates to a multi-layer assembly comprising at least one erosion barrier layer, at least one thermal insulation layer, at least one composite structure layer and at least one gas barrier layer, its use as a battery enclosure, its manufacturing, as well as battery stacks and integrated energy storage units comprising same.

Battery enclosures are protective covers or casings designed to house one or more electrochemical cells, such as batteries, safely. They are commonly made from materials like plastics, metal, etc. and serve to contain and insulate the battery cells from external elements. They play a crucial role in preventing short circuits, leakage and physical damage thereby ensuring the safe and efficient operation of batteries in various applications, from small consumer electronics to electric vehicles and renewable energy storage systems. Battery enclosures often incorporate features like thermal insulation or flame retardancy materials to enhance safety.

As the industry increasingly transitions towards electric vehicles for the environmental benefits and efficiency, concerns about fire risks associated with the high-voltage lithium-ion battery powering have emerged. The unique chemistry and energy density of batteries, such as lithium-ion batteries, while enabling increased capacities, also pose challenges in terms of thermal runaway and potential fire hazards.

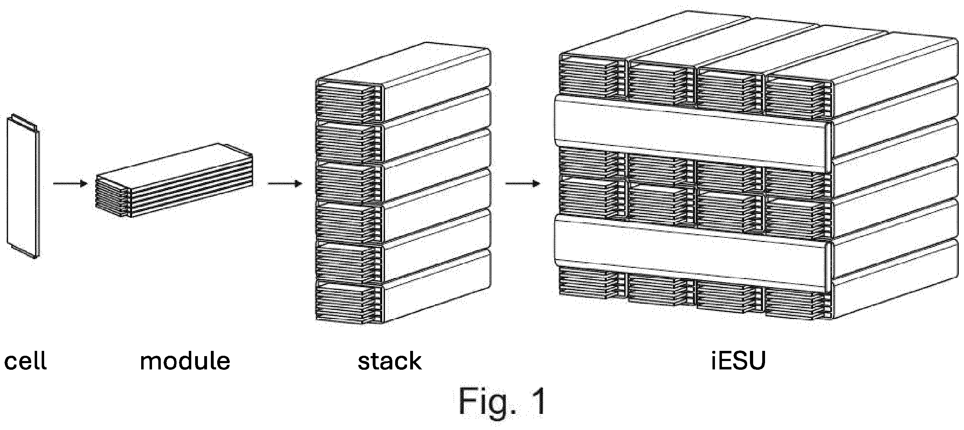

Thermal runaway in batteries refers to a self-reinforcing uncontrollable increase in temperature within the battery cell, leading to rapid heating and potential culminating in cell rupture, fire or explosion. It typically occurs due to internal or external factors causing a breakdown in the normal chemical and physical processes within the battery. Factors, such as overcharging, over-discharging, physical damage, manufacturing defects or exposure to high temperatures can trigger thermal runaway. Once initiated, thermal runaway can propagate rapidly throughout the battery pack, posing serious safety risks. Battery management systems and safety mechanisms are implemented to mitigate the risk of thermal runaway in various battery applications including vehicles. In particular applications which have high energy demand, e.g. electric vehicles (such as cars or aircrafts) require a plurality of battery cells. In such applications, a certain number of batteries are packed together in separate units, e.g. modules, while several modules may be packed in so called stacks and several stacks may form an integrated energy system unit (iESU) (Figure 1).The modular packaging of batteries shall help to decrease the risk of fire propagation, that is fire shall be restricted to the module volume, or to the stack volume, but in any event to the iESU volume and shall not spread to other units. The enclosures described above may recently also be used to shield defective batteries, modules, stacks or iESUs from intact units to prevent fire propagation, e.g. in case of thermal runaway. The security measures for the enclosures increase in the order module, stack and iESU.

The battery enclosure, thus, must sustain structural load due to vehicle dynamics, crash impacts, thermal runaway and explosive pressurization associated therewith, besides static loads due to packaging compression. On the one hand, the enclosures have to be heat- and flame-resistant and on the other hand must have sufficient mechanical resistance to prevent damage from hard and abrasive particles delivered during thermal runaway having high velocity impact.

Conventionally, plastic materials are used which are flammable and not sufficiently stable in the heat load of a thermal runaway event. These materials are combined with aluminum structures to alleviate the latter disadvantages and to confer higher specific strength and stiffness. Such materials work sufficiently well in applications where weight of the enclosure is not a critical factor. Such enclosures, however, are excluded in applications in which weight plays a more significant role, for instance in aeronautics.

The problem underlying the present invention was therefore to provide an enclosure for electrochemical cells, such as batteries, modules, stacks and integrated energy storage units that are resistant to external and internal fire, and show no leakage of material from the enclosure, no failure under any load condition including explosive pressure loading during thermal runaway, minimal weight to improve energy density per mass and minimum volume to fit within space limitations.

Surprisingly, the problem is solved by a multi-layer assembly comprising an erosion barrier layer, a thermal insulation layer, a composite structure layer and a gas barrier layer.

Thus, in one aspect, the present invention relates to a multi-layer assembly comprising
(0) optionally at least one electrical insulation layer,
(i) at least one erosion barrier layer,
(ii) at least one thermal insulation layer,
(iii) at least one composite structure layer, and
(iv) at least one gas barrier layer.

Preferably, a multi-layer assembly comprises
(0) optionally an electrical insulation layer,
(i) an erosion barrier layer,
(ii) a thermal insulation layer,
(iii) a composite structure layer, and
(iv) a gas barrier layer.

The multi-layer assembly is preferably designed in a sheet-like structure, meaning that each layer is in the form of a sheet. The term "outer surface" in the sense of the present invention refers independently to the two surfaces having the biggest area and facing on the one side the environment and on the other side the remaining layers of the multi-layer assembly.

Within the multi-layer assembly, at least one thermal insulation layer (ii) is preferably positioned between at least one composite structure layer (iii) and at least one erosion barrier layer (i).

At least one gas barrier layer is preferably positioned at the outer surface, preferably at one of the two outer surfaces, of the multi-layer assembly.

At least one erosion barrier layer is preferably positioned at the outer surface, preferably at one of the two outer surfaces, of the multi-layer assembly. Alternatively, at least one electrical insulation layer is preferably positioned at the outer surface, preferably at one of the two outer surfaces, of the multi-layer assembly.

In a preferred embodiment, the multi-layer assembly exhibits at least one erosion barrier layer at one outer surface and at least one gas barrier layer at the other outer surface. Alternatively, the multi-layer assembly exhibits at least one electrical insulation layer at one outer surface and at least one gas barrier layer at the other outer surface.

Alternatively, the multi-layer assembly may exhibit at least one electrical insulation layer at one outer surface and at least one gas barrier layer at the other outer surface.

In the multi-layer assembly according to the invention, at least one gas barrier layer is preferably adjacent to at least one composite structure layer.

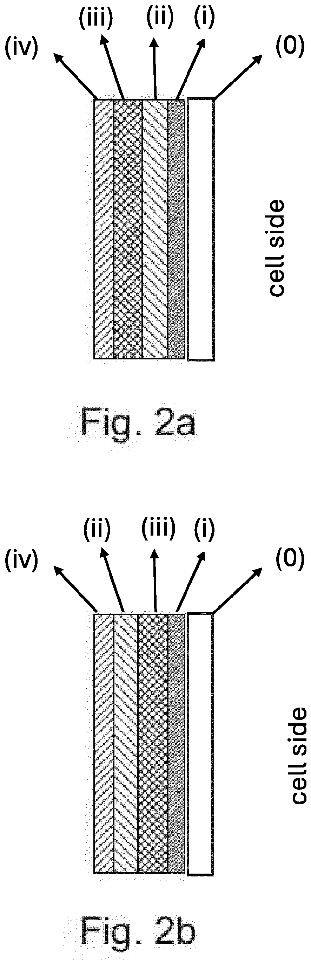

Preferably, the multi-layer assembly exhibits the respective layers in the following order: (i)-(ii)-(iii)-(iv), alternatively (0)-(i)-(ii)-(iii)-(iv) (Figure 2A), or (i)-(iii)-(ii)-(iv), alternatively (0)-(i)-(iii)-(ii)-(iv) (Figure 2B), more preferably, (i)-(ii)-(iii)-(iv). Preferably, the respective layers are in direct contact with the upper or lower layer, if any. The (i)-(ii)-(iii)-(iv)/(0)-(i)-(ii)-(iii)-(iv) (Figure 2A) assembly particularly uses the thermal insulation layer (ii) to protect the composite structure layer (iii) during a thermal runaway event. In case of the (i)-(iii)-(ii)-(iv)/ (0)-(i)-(iii)-(ii)-(iv) design, the insulation layer (ii) is protected by the composite structure layer (iii).

The optional electrical insulation layer (0) prevents short circuits due to direct contact, clearance limitations, or electrical creepage. Preferably, the electrical insulation layer comprises a laminate including a polyimide carrier film having applied thereon a fluorine containing polymer, such as fluoroethylenepropylene (FEP). While the fluorine containing polymer provides for creepage resistance, the polyimide carrier film provides dielectric breakdown, temperature tolerance, mechanical performance and allows for easy bonding and integration in the multilayer assembly of the invention. The above electrical insulation layer (0) is preferably located such that the fluorine containing polymer is located at the outer surface.

The electrical insulation layer preferably has a thickness of 0.025 to 0.2 mm, preferably 0.05 to 0.1 mm and/or has a comparative tracking resistance of at least CTI 400 on at least one side measured according to ASTM D3638.

The erosion barrier layer should withstand highest mechanical loads, in particular abrasive and thermal loads. When used as a battery enclosure, the erosion barrier layer shall withstand the abrasive and heat conditions in case of a thermal runaway.

Therefore, the erosion barrier layer preferably has a temperature limit of at least 1000°C, preferably 2000°C measured according to thermal runaway testing UL 2596.

Preferably, the erosion barrier layer erodes less than 1 mm in depth, preferably less than 0.1 mm in depth, more preferably 0.001 to 0.1 mm in depth, measured according to UL 2596 test method with the unprotected erosion barrier layer 5 mm away from the cell electrodes.

The erosion barrier layer may comprise at least one of a polymer resin or ceramic material, which is optionally reinforced with fibers.

Suitable polymer resins in the erosion barrier layer have a char yield of ≥ 30%, preferably ≥ 50% measured according to ASTME E1131. Those polymers allow to form a stable, e.g. glassy carbon, residue after decomposition. This residue continues to perform the basic functions of the polymer resin for load transfer and sealing, however, with reduced performance.

Preferably, the polymer resin is selected from a thermoplastic polymer, more preferably polyimide (PI), polyether ether ketone (PEEK), polyether ketone ketone (PEKK), polyaryl ether ketone (PAEK), polyamide imide (PAI), polyether sulfone (PES), polyphenylene sulfide (PPS) or polyether imide (PEI), or a thermosetting polymer, preferably epoxy resin, phenolic resin, bismaleimide resin, cyanate ester resin, polyurethane resin, or silicone, more preferably PI, phenolic resin, silicone or PAEK, even more preferably PI.

The fibers for reinforcement are preferably selected from carbon fiber, carbon nanotubes, glass fiber, ceramic fiber, basalt fiber, silicon carbide fiber, quartz fiber, silicon dioxide fiber, alumina fiber, boron nitride fibers, or mixtures thereof, more preferably, carbon fiber and ceramic fiber. It was found that carbon and ceramic fibers ideally tolerate the thermal runaway environment due to their high temperature stability under low oxygen or reducing conditions as is the case in thermal runaway events.

The erosion barrier layer preferably comprises at least one polymer resin which is reinforced with fibers. The polymer resin alone (without fiber reinforcement) often becomes too brittle in a thermal runaway event and then lacks sufficient stability.

The ceramic material which may be comprised in the erosion barrier layer is preferably mica, alumina, quartz, basalt, zirconate, titanate, or a mixture thereof.

The erosion barrier layer preferably has a thickness of 0.05 to 2 mm, preferably 0.2 to 0.5 mm.

The thermal insulation layer shall prevent overheating, e.g. during a thermal runaway. The key characteristics of the thermal insulation layer are low thermal conductivity, high thermal stability, high density and high compression properties.

Preferably, the thermal insulation layer comprises cavities filled with gas. The cavities may be open pores or closed pores, preferably closed pores, usually having an average diameter of 0.05 to 5,000 µm.

The cavities are preferably filled with gas such as air, CO₂, noble gases such as helium or argon, nitrogen, or mixtures thereof. Preferably, the thermal insulation layer is a foam, particularly a closed cell foam, preferably having an average pore size of 0.05 to 5,000 µm, an aerogel, or is a woven or non-woven fiber structure. Preferably, the woven fiber structure forms a woven fabric, whereas the non-woven fiber structure refers to a fleece.

The thermal insulation layer particularly has a density of 5 to 500 kg/m³, more preferably of 50 to 250 kg/m³. Moreover, the thermal insulation layer may have a compressional stiffness of 1 to 10,000 MPa, preferably 5 to 50 MPa measured according to ASTM D 1621. The thermal insulation layer preferably has a thermal conductivity of 0.01 to 0.5 W/mK, preferably 0.015 to 0.1 W/mK measured according to ASTM C177.

For example, the thermal insulation layer may comprise at least one of a ceramic material, preferably comprising silica and/or mica, a polymeric resin, such as phenolic resin, epoxy resin, polyurethane resin (PU), bismaleimide resin (BMI), polyimide (PI), polyether ether ketone (PEEK), polyether ketone ketone (PEKK), polyaryl ether ketone (PAEK), polyamide imide resin (PAI), polyether sulfone resin (PES), polyphenylene sulfide resin (PPS), silicone, polyether imide resin (PEI), cork or wood, preferably PEI or ceramic material.

The thermal insulation layer (ii) preferably has a thickness of 0.2 to 5 mm, more preferably 0.5 to 2 mm.

The composite structure layer must carry the load of the cells continuously at least at 60°C, survive crash loads of more than 200 g and withstand pressure, heat and smoke during thermal runaway. For this reason, the composite structure material should have high specific strength, high T_{g}, thermal and thermal oxidative stability. Ideally, the composite structure layer is non-porous.

The at least one composite structure layer preferably has a density of 1000 to 3000 kg/m³, more preferably 1200 to 1800 kg/m³.

The composite structure layer preferably has a tensile strength of 2 to 5 GPa, preferably 2.5 to 4.5 GPa in the fiber direction(s) measured according to ASTM D3039 and/or tensile stiffness of 130 to 230 GPa, preferably 150 to 200 GPa in the fiber direction(s) measured according to ASTM D3039.

The composite structure layer may comprise a polymer resin, a ceramic matrix material or a metal such as aluminum, optionally reinforced with fibers.

The polymer resin is preferably selected from a thermoplastic polymer, preferably PI, PEEK, PEKK, PAEK, PAI, PES, PPS or PEI or a thermosetting polymer, preferably epoxy resin, phenolic resin, bismaleimide resin, cyanate ester resin, polyurethane resin, more preferably PI, phenolic resin or PAEK.

The composite structure layer may also comprise a sandwich structure. Thus, the above-described materials may be applied as skins of a low-density core material to form a sandwich. Such sandwich structures may improve specific stiffness and improve thermal insulation performance.

The fibers for reinforcing the above materials are preferably at least one of carbon nanotubes, carbon fiber, glass fiber, ceramic fiber, boron nitride nanotubes or aramide fiber.

The overall composite structure layer has preferably a thickness of 0.5 to 5 mm, preferably 2 to 4 mm. In case of multiple composite structure layers, each layer may independently have a thickness in the range of 0.2 to 1 mm, preferably 0.5 to 1 mm.

The gas barrier layer preferably prevents convective mass transport of gases. The gas barrier layer is particularly applied at the outer surface of the multi-layer assembly. Particularly, the gas barrier layer prevents gases, particularly air and oxygen to enter within the multi-layer assembly. During thermal runaway, for instance the interior volume may exceed above 500°C for significant times before cooling. The atmosphere within the iESU or subunits thereof, include smoke and flammable degradation gases which tend to spontaneous combustion. To lower the risk of a spontaneous self-combustion the internal atmosphere can be prevented from mixing with oxygen-containing gases, which bears an increased risk of selfignition. The gas barrier layer prevents access of gases, such as air and oxygen. Accordingly, the gas barrier layer shall be gas-impermeable - even at high temperatures such as 500-1,000°C. Thus, the gas barrier shall have low permeability to air and oxygen and maintain low-permeability even at 500 to 1000° C for several (3-7) minutes.

Preferably, the at least one gas barrier layer (iv) comprises at least one of aluminum, titanium, steel, polyamide, aramide, polyurethane, epoxy resin, silicone or ceramic, such as zirconates, alumina, silica, mica, silicon carbide, titanium nitride.

The gas barrier layer may be in the form of a coating. The gas barrier layer may have a thickness of 20 µm to 500 µm, preferably 50 to 150 µm.

In a very preferred embodiment, the multi-layer assembly comprises
(0) an optional electrical insulation layer, such as a PI-FEP laminate,
(i) an erosion barrier layer, comprising at least one of fiber-reinforced phenolic resin, fiber-reinforced epoxy resin, PI or mica,
(ii) a thermal insulation layer comprising at least one of porous silica, polyimide foam and polyimide aerogel,
(iii) a composite structure layer comprising at least one of a fiber-reinforced polymer resin, and
(iv)a gas barrier layer comprising at least one of polyimide, polyaramide/mica composite or aluminum.

The overall density of the multi-layer assembly according to the invention is in the range of 500 to 3000 kg/m³, preferably 800 to 2500 kg/m³.

Another aspect of the present invention is a battery enclosure comprising a multilayer assembly according to the invention.

The multi-layer assembly may be used as a battery enclosure, in particular for a side wall, preferably a side wall of an electrochemical cell enclosure, a module enclosure, a stack enclosure or an iESU enclosure, preferably a stack enclosure. The multilayer assembly according to the invention is ideally used as a side wall of a battery stack. The electrochemical cell, the module, the stack or the iESU is preferably positioned adjacent to the erosion barrier layer. That is, during thermal runaway, high velocity and high temperature particles deriving from the electrochemical cell, the module, stack or iESU components hit the erosion barrier layer, which protects the remaining layers of the multi-layer assembly.

The multi-layer assembly is further preferably used such that the at least one gas barrier layer is positioned most remote from the electrochemical cell, module, stack or iESU. This assembly allows the lowest risk of damage of the usually very thin gas barrier layer. The multi-layer assembly is further preferably used such that the at least one electrical insulation layer - if present - is positioned closest to the electrochemical cell, module, stack or iESU. This assembly allows the lowest risk of short circuit between the electrified components and grounded components.

In another aspect, the present invention refers to a method of manufacturing a multilayer assembly according to the present invention comprising the steps
a) simultaneous thermal pressing of optionally at least one electrical insulation layer, at least one erosion barrier layer, at least one thermal insulation layer, at least one composite structure layer and optionally at least one gas barrier layer, and
b) optionally applying at least one gas barrier layer to the composite structure layer of the thermo-pressed material obtained after step a).

In step a), optionally the at least one electrical insulation layer, the at least one erosion barrier layer, the at least one thermal insulation layer, the at least one composite structure layer and optionally at least one gas barrier layer are preferably positioned in a mold. Under preferably increased temperatures such as 50 to 280° C and/or increased pressures such as 0.1 to 0.8 MPa, the respective layers are fused together such that the layers cannot be separated at temperatures between 20 to 800°C.

In a preferred embodiment, the thermoplastic resins used combine with the adjacent layer to provide a multi-layer assembly. In case of thermosetting resins, the layers may be provided preferably in a non-cured or incompletely cured state within the mold. In the latter case, the conditions in step a) are adjusted to induce complete curing during step a). The respective layers of the multi-layer assembly are to be chosen such that good adhesion is provided between the layers.

The assembly obtained after step a) may then be equipped with a gas barrier layer. The at least one gas barrier layer is applied to the composite structure layer in step b). Preferably, the gas barrier layer is applied by coating, such as spraying, electrode depositing, painting, plasma spray coating, thermal spray coating and painting. Step b) is in particular conducted if the gas barrier layer is not present in step a). The above method allows for an application of a very thin but gas-impermeable layer, thereby saving weight.

The above method allows an integrated manufacturing of the multi-layer assembly. The respective orientation and order of the layers as well as the types of layers is adjusted to conduct a one-step or two-step manufacturing process.

In another aspect, the present invention further relates to a battery stack or integrated energy storage unit, comprising a multi-layer assembly according to the invention and at least one electrochemical cell. In the battery stack or the iESU according to the invention, the multi-layer assembly according to the invention preferably forms the envelope including the at least one electrochemical cell. In particular, the battery stack or the iESU according to the invention exhibits side walls which are formed by the multi-layer assembly according to the present invention having incorporated at least one electrochemical cell.

The battery stack or iESU according to the present invention represent a very light and efficient measure to reduce the impact potentially deriving from (a plurality of) defective electrochemical cells. The battery stacks or the integrated energy storage units according to the invention are ideal for use in lightweight applications, where the overall weight of the battery stack or iESU plays an important role. Such lightweight applications are for instance traffic, aeronautics, defense, vehicles, such as cars, planes, helicopters, eVTOL aircrafts, drones, munition, etc.

Thus, the present invention is also directed to the use of a battery stack or an integrated energy storage unit for lightweight applications, such as traffic, aeronautics, and defense.
Fig. 1 schematically shows the relationship between cells, modules, stacks and iESUs. The module shown exhibits six cells, such as batteries, while six modules form a stack. The shown iESU comprises four stacks.
Fig. 2 shows preferred embodiments of the multi-layer assembly according to the present invention. The cell side indicates the position of the cell, module stack or iESU.

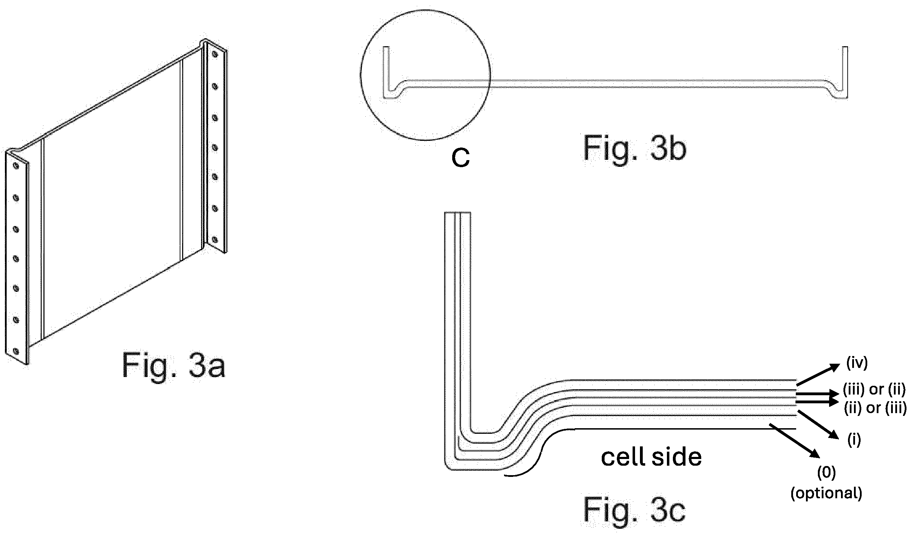

Fig. 3A illustrates an exemplary side wall formed of a multi-layer assembly according to the invention for enveloping electrochemical cells, modules, stacks or iESUs.
Fig. 3B is a top view of the side wall according to Fig. 3A. An exemplary exploded view of part C of Fig. 3B is given in Fig. 3C. Fig. 3C illustrates the multi-layer assembly according to the invention within the structural element of Fig. 3A.

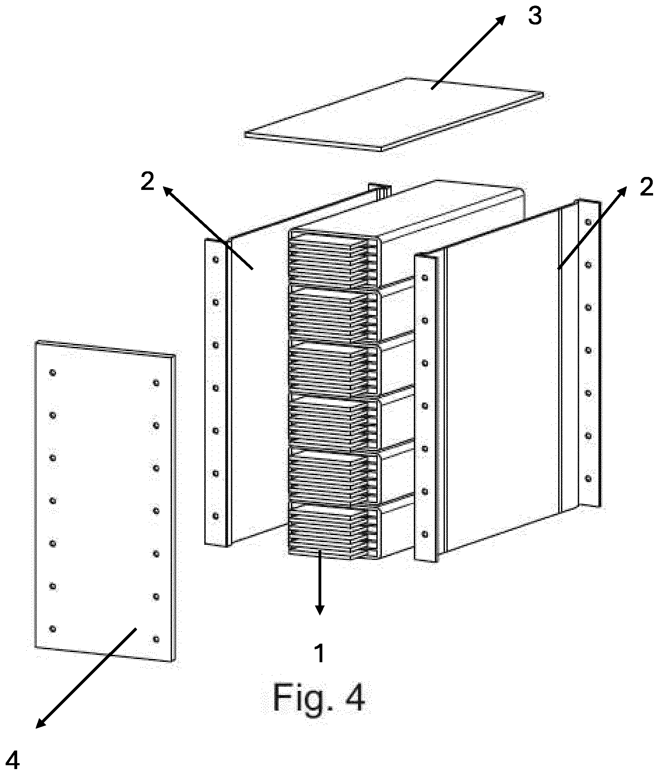

Fig. 4 exemplifies a battery enclosure according to the present invention using the multi-layer assembly according to the invention for enveloping a stack (1) of six modules with multi-layer assembly side walls (2). (3) and (4) according to the present invention.

The present invention is moreover defined by the following items:
1. Multi-layer assembly, comprising
   (0) optionally at least one electrical insulation layer,
   (i) at least one erosion barrier layer,
   (ii) at least one thermal insulation layer,
   (iii) at least one composite structure layer, and
   (iv) at least one gas barrier layer.
2. Multi-layer assembly according to item 1, wherein at least one thermal insulation layer (ii) is positioned between at least one composite structure layer (iii) and at least one erosion barrier layer (i).
3. Multi-layer assembly according to item 1 or 2, wherein at least one gas barrier layer is positioned at the outer surface.
4. Multi-layer assembly according to any of the preceding items, wherein at least one erosion barrier layer or at least one electrical insulation layer,is positioned at the outer surface.
5. Multi-layer assembly according to the preceding items, wherein at least one gas barrier layer is adjacent to at least one composite structure layer.
6. Multi-layer assembly according to the preceding items, wherein the order of the layers is: (i)-(ii)-(iii)-(iv), alternatively (0)-(i)-(ii)-(iii)-(iv) or (i)-(iii)-(ii)-(iv), alternatively (0)-(i)-(iii)-(ii)-(iv), preferably, (i)-(ii)-(iii)-(iv), alternatively (0)-(i)-(ii)-(iii)-(iv).
7. Multi-layer assembly according to any of the preceding items, wherein the erosion barrier layer has a temperature limit of at least 1000 °C, preferably 2000 °C, measured according to thermal runaway testing UL2596.
8. Multi-layer assembly according to any of the preceding items, wherein the erosion barrier layer erodes less than 1 mm in depth, preferably less than 0.1 mm in depth measured according to UL2596 test method with the unprotected erosion barrier layer 5 mm away from the cell electrodes.
9. Multi-layer assembly according to any of the preceding items, wherein the erosion barrier layer comprises at least one of a polymer resin or ceramic material, optionally reinforced with fibers.
10. Multi-layer assembly according to the preceding items, wherein the polymer resin in the erosion barrier layer has a char yield of ≥ 30%, preferably ≥ 50% measured according to ASTM E1131.
11. Multi-layer assembly according to any of items 9-10, wherein the polymer resin is selected from a thermoplastic polymer, such as polyimide (PI), polyether ether ketone (PEEK), polyether ketone ketone (PEKK), polyaryl ether ketone (PAEK), polyamide imide (PAI), polyether sulfone (PES), polyphenylene sulfide (PPS) or polyether imide (PEI), or a thermosetting polymer, such as epoxy resin, phenolic resin, bismaleimide resin, cyanate ester resin, polyurethane resin, or silicone, preferably PI, phenolic resin, silicone or PAEK, more preferably PI.
12. Multi-layer assembly according to any of items 9-11, wherein the fibers are selected from carbon fiber, carbon nanotubes, glass fiber, ceramic fiber, basalt fiber, silicon carbide fiber, quartz fiber, silicon dioxide fiber, alumina fiber, boro nitride fibers, or mixtures thereof.
13. Multi-layer assembly according to any of the preceding items, wherein the erosion barrier layer has a thickness of 0.05 to 2 mm, preferably 0.2 to 0.5 mm.
14. Multi-layer assembly according to any of the preceding items, wherein the thermal insulation layer comprises cavities preferably filled with gas.
15. Multi-layer assembly according to any of the preceding items, wherein the thermal insulation layer is a foam, preferably having an average pore size of 0.05-5,000 µm, an aerogel, or is a woven or non-woven fiber structure.
16. Multi-layer assembly according to any of the preceding items, wherein the thermal insulation layer has a density of 5 to 500 kg/m³, preferably 50 to 250 kg/m³.
17. Multi-layer assembly according to any of the preceding items, wherein the thermal insulation layer has a compressional stiffness of 1 to 10,000 MPa, preferably 5 to 50 MPa measured according to ASTM D1621.
18. Multi-layer assembly according to one of the preceding items, wherein the thermal insulation layer has a thermal conductivity of 0.01 to 0.5 W/mK, preferably 0.015 to 0.1 W/mK measured according to ASTM C177.
19. Multi-layer assembly according to any of the preceding items, wherein the thermal insulation layer comprises at least one of a ceramic material, preferably comprising silica and/or mica, a polymeric resin, such as phenolic resin, epoxy resin, polyurethane (PU), bismaleimide (BMI), polyimide (PI), polyether ether ketone (PEEK), polyether ketone ketone (PEKK), polyaryl ether ketone (PAEK), polyamide imide (PAI), polyether sulfone (PES), polyphenylene sulfide (PPS), silicone, polyether imide (PEI), cork or wood, more preferably PEI or ceramic material.
20. Multi-layer assembly according to any of the preceding items, wherein the thermal insulation layer (ii) has a thickness of 0.2 to 5 mm, preferably 0.5 to 2 mm.
21. Multi-layer assembly according to any of the preceding items, wherein the composite structure layer has a density of 1000 to 3000 kg/m³, preferably 1200 to 1800 kg/m³.
22. Multi-layer assembly according to any of the preceding items, wherein the composite structure layer has a use strength of 2 to 5 GPa, preferably 3-4 GPa, in the fiber direction(s), measured according to ASTM D3039 and/or tensile stiffness of 130 to 230 GPa, preferably 180-220 GPa in the fiber direction(s) measured according to ASTM D3039.
23. Multi-layer assembly according to any of the preceding items, wherein the composite structure layer comprises a sandwich structure.
24. Multi-layer assembly according to any of the preceding items, wherein the composite structure layer comprises a polymer resin, ceramic matrix, or a metal, such as aluminum, optionally reinforced with fibers.
25. Multi-layer assembly according to item 24, wherein the polymer resin is selected from a thermoplastic polymer, preferably PI, PEEK, PEKK, PAEK, PAI, PES, PPS or PEI, or a thermosetting polymer, preferably epoxy resin, phenolic resin, bismaleimide resin, cyanate ester resin, polyurethane resin, more preferably from PI, phenolic resin, or PAEK.
26. Multi-layer assembly according to any of items 24-25 wherein the fiber is at least one of carbon nanotube, carbon fiber, glass fiber, ceramic fiber, boron nitride nanotube, or aramide fiber.
27. Multi-layer assembly according to any of the preceding items, wherein the composite structure layer has a thickness of 0.5 to 5 mm, preferably 2 to 4 mm.
28. Multi-layer assembly according to any of the preceding items, wherein the gas barrier layer prevents convective mass transport of gases.
29. Multi-layer assembly according to any of the preceding items, wherein the at least one gas barrier layer (iv) comprises at least one of aluminum, titanium, steel, polyimide, aramide, polyurethane, epoxy resin, silicone, or ceramics such as zirconates, alumina, silica, mica, silicon carbide, titanium nitride.
30. Multi-layer assembly according to any of the preceding items, wherein the gas barrier layer is in the form of a coating.
31. Multi-layer assembly according to any of the preceding items, wherein the gas barrier layer has a thickness of 20 µm to 500 µm, preferably 50 to 150 µm.
32. Multi-layer assembly comprising
   (0) optionally at least one electrical insulation layer,
   (i) an erosion barrier layer comprising at least one of fiber reinforced phenolic resin, fiber reinforced epoxy resin, PI, or mica,
   (ii) a thermal insulation layer comprising at least one of porous silica polyimide foam and polyimide aerogel,
   (iii) a composite structure layer comprising at least one of a fiber-reinforced polymer resin,
   (iv)a gas barrier layer comprising at least one of polyimide, polyaramide/mica composite, or aluminum.
33. Multi-layer assembly according to any of the preceding items, which has a density of 500 to 3000 kg/m³.
34. Battery enclosure comprising a multi-layer assembly according to any of items 1-33 and 41.
35. Use of a multi-layer assembly according to any of items 1-33 and 41 for an electrical cell enclosure, module enclosure, stack enclosure or iESU enclosure, in particular for a side wall of an electrical cell enclosure, module enclosure, stack enclosure or iESU enclosure.
36. Use of a multi-layer assembly according to item 35, wherein the battery or the battery stack is positioned adjacent to the erosion barrier layer.
37. Method of manufacturing a multi-layer assembly according to any of items 1-33 and 41, comprising the steps
   a) simultaneous thermal pressing of optionally at least one electrical insulation layer, at least one erosion barrier layer, at least one thermal insulation layer, at least one composite structure layer and optionally at least one gas barrier layer, and
   b) optionally applying at least one gas barrier layer to the composite structure layer of the thermo-pressed material obtained after step a).
38. Method according to item 37, wherein application of the at least one gas barrier layer is conducted by coating, such as spraying, electro depositing, painting, plasma spray coating, thermal spray coating, painting.
39. Battery stack or integrated energy storage unit, comprising a multi-layer assembly according to any of items 1-33 and 41, and at least one electrochemical cell.
40. Use of a battery stack or an integrated energy storage unit according to item 39 for lightweight applications, such as traffic, aeronautics and defense, e.g. cars, planes, helicopters, eVTOL aircrafts, drones, and munition.
41. Multi-layer assembly according to any of items 1-33, wherein the electrical insulation layer has a thickness of 0.025-0.3 mm, preferably 0.05 to 0.1 mm and/or has a comparative tracking resistance of at least CTI 400 on at least one side measured according to ASTM D3638, and/or comprises a laminate including a polyimide carrier film having applied thereon a fluorine containing polymer, such as fluoroethylenepropylene (FEP).

## Claims

1. Multi-layer assembly, comprising
(0) optionally at least one electrical insulation layer,
(i) at least one erosion barrier layer,
(ii) at least one thermal insulation layer,
(iii) at least one composite structure layer, and
(iv) at least one gas barrier layer,
which has preferably a density of 500 to 3000 kg/m³.

2. Multi-layer assembly according to claim 1, wherein at least one thermal insulation layer (ii) is positioned between at least one composite structure layer (iii) and at least one erosion barrier layer (i),
and/or
wherein at least one gas barrier layer is positioned at the outer surface,
and/or
wherein at least one erosion barrier layer is positioned at the outer surface, and/or wherein at least one gas barrier layer is adjacent to at least one composite structure layer, and/or
wherein the order of the layers is (i)-(ii)-(iii)-(iv), alternatively (0)-(i)-(ii)-(iii)-(iv) or (i)-(iii)-(ii)-(iv), alternatively (0)-(i)-(iii)-(ii)-(iv).

3. Multi-layer assembly according to any of the preceding claims, wherein the erosion barrier layer has a temperature limit of at least 1000 °C, preferably 2000 °C, measured according to thermal runaway testing UL2596, and/or
wherein the erosion barrier layer erodes less than 1 mm in depth, preferably less than 0.1 mm in depth measured according to UL2596 test method with the unprotected erosion barrier layer 5 mm away from the cell electrodes, and/or wherein the erosion barrier layer comprises at least one of a polymer resin or ceramic material, optionally reinforced with fibers, preferably selected from carbon fiber, carbon nanotubes, glass fiber, ceramic fiber, basalt fiber, silicon carbide fiber, quartz fiber, silicon dioxide fiber, alumina fiber, boro nitride fibers, or mixtures thereof, and/or
wherein the erosion barrier layer has a thickness of 0.05 to 2 mm, preferably 0.2 to 0.5 mm.

4. Multi-layer assembly according to claim 3, wherein the polymer resin in the erosion barrier layer has a char yield of ≥ 30%, preferably ≥ 50% measured according to ASTM E1131, and/or
wherein the polymer resin is selected from a thermoplastic polymer, such as polyimide (PI), polyether ether ketone (PEEK), polyether ketone ketone (PEKK), polyaryl ether ketone (PAEK), polyamide imide (PAI), polyether sulfone (PES), polyphenylene sulfide (PPS) or polyether imide (PEI), or a thermosetting polymer, such as epoxy resin, phenolic resin, bismaleimide resin, cyanate ester resin, polyurethane resin, or silicone, preferably PI, phenolic resin, silicone or PAEK, more preferably PI.

5. Multi-layer assembly according to any of the preceding claims, wherein the thermal insulation layer comprises cavities preferably filled with gas, and/or
wherein the thermal insulation layer is a foam, preferably having an average pore size of 0.05-5,000 µm, an aerogel, or is a woven or non-woven fiber structure,
and/or
wherein the thermal insulation layer has a density of 5 to 500 kg/m³, preferably 50 to 250 kg/m³ and/or
wherein the thermal insulation layer has a compressional stiffness of 1 to 10,000 MPa, preferably 5 to 50 MPa measured according to ASTM D1621, and/or wherein the thermal insulation layer has a thermal conductivity of 0.01 to 0.5 W/mK, preferably 0.015 to 0.1 W/mK measured according to ASTM C177, and/or wherein the thermal insulation layer comprises at least one of a ceramic material, preferably comprising silica and/or mica, a polymeric resin, such as phenolic resin, epoxy resin, polyurethane (PU), bismaleimide (BMI), polyimide (PI), polyether ether ketone (PEEK), polyether ketone ketone (PEKK), polyaryl ether ketone (PAEK), polyamide imide (PAI), polyether sulfone (PES), polyphenylene sulfide (PPS), silicone, polyether imide (PEI), cork or wood, more preferably PEI or ceramic material, and/or
wherein the thermal insulation layer (ii) has a thickness of 0.2 to 5 mm, preferably 0.5 to 2 mm.

6. Multi-layer assembly according to any of the preceding claims, wherein the composite structure layer has a density of 1000 to 3000 kg/m³, preferably 1200 to 1800 kg/m³ and/or
wherein the composite structure layer has a use strength of 2 to 5 GPa in the fiber direction(s), measured according to ASTM D3039 and/or tensile stiffness of 130 to 230 GPa, preferably 180-220 GPa in the fiber direction(s) measured according to ASTM D3039, and/or
wherein the composite structure layer comprises a sandwich structure, and/or wherein the composite structure layer comprises a polymer resin, preferably selected from a thermoplastic polymer, more preferably PI, PEEK, PEKK, PAEK, PAI, PES, PPS or PEl, or a thermosetting polymer, more preferably epoxy resin, phenolic resin, bismaleimide resin, cyanate ester resin, polyurethane resin, ceramic matrix, or a metal, such as aluminum, optionally reinforced with fibers, preferably at least one of carbon nanotube, carbon fiber, glass fiber, ceramic fiber, boron nitride nanotube, or aramide fiber, and/or
wherein the composite structure layer has a thickness of 0.5 to 5 mm, preferably 2 to 4 mm.

7. Multi-layer assembly according to any of the preceding claims, wherein the gas barrier layer prevents convective mass transport of gases, and/or
wherein the gas barrier layer (iv) comprises at least one of aluminum, titanium, steel, polyimide, aramide, polyurethane, epoxy resin, silicone, or ceramics such as zirconates, alumina, silica, mica, silicon carbide, titanium nitride, and/or wherein the gas barrier layer is in the form of a coating, and/or
wherein the gas barrier layer has a thickness of 20 µm to 500 µm, preferably 50 to 150 µm.

8. Multi-layer assembly according to any of the preceding claims comprising
(0) optionally at least one electrical insulation layer,
(i) an erosion barrier layer comprising at least one of fiber reinforced phenolic resin, fiber reinforced epoxy resin, PI, or mica,
(ii) a thermal insulation layer comprising at least one of porous silica polyimide foam and polyimide aerogel,
(iii) a composite structure layer comprising at least one of a fiber-reinforced polymer resin,
(iv) a gas barrier layer comprising at least one of polyimide, polyaramide/mica composite, or aluminum.

9. Battery enclosure comprising a multi-layer assembly according to any of the preceding claims.

10. Use of a multi-layer assembly according to any of claims 1-8 for an electrical cell enclosure, module enclosure, stack enclosure or iESU enclosure, in particular for a side wall of an electrical cell enclosure, module enclosure, stack enclosure or iESU enclosure.

11. Use of a multi-layer assembly according to claim 10, wherein the battery or the battery stack is positioned adjacent to the erosion barrier layer.

12. Method of manufacturing a multi-layer assembly according to any of claims 1-8, comprising the steps
a) simultaneous thermal pressing of optionally at least one electrical insulation layer, at least one erosion barrier layer, at least one thermal insulation layer, at least one composite structure layer and optionally at least one gas barrier layer, and
b) optionally applying at least one gas barrier layer to the composite structure layer of the thermo-pressed material obtained after step a).

13. Method according to claim 12, wherein application of the at least one gas barrier layer is conducted by coating, such as spraying, electro depositing, painting, plasma spray coating, thermal spray coating, painting.

14. Battery stack or integrated energy storage unit, comprising a multi-layer assembly according to any of claims 1-8, and at least one electrochemical cell.

15. Use of a battery stack or an integrated energy storage unit according to claim 14 for lightweight applications, such as in traffic, aeronautics and defense, e.g. in cars, planes, helicopters, eVTOL aircrafts, drones, and munition.
